# EUROPEAN PATENT APPLICATION

(11) **EP 4 460 011 A1**
(43) Date of publication of application: **06.11.2024**
(21) Application number: 23746395.5
(22) Date of filing: 28.01.2023
(51) Int. Cl.: H04N 21/466

(54) **LIVE STREAMING STUDIO TOPIC RECOMMENDATION METHOD AND APPARATUS, DEVICE, AND MEDIUM**

(30) Priority: 28.01.2022 CN 202210108213
(71) Applicant: Beijing Zitiao Network Technology Co., Ltd., Beijing 100190 (CN)
(72) Inventor: DONG, Shiwei, Beijing 100086 (CN); WANG, Jinxin, Beijing 100086 (CN); YANG, Can, Beijing 100086 (CN)
(74) Representative: Dentons UK and Middle East LLP
(86) International application number: PCT/CN2023/073565
(87) International publication number: WO 2023/143518

(57) **Abstract**

Embodiments of the present invention relate to a live streaming studio topic recommendation method and apparatus, a device, and a medium. The method comprises: acquiring a live streaming studio topic recommendation request, and determining, according to the live streaming studio topic recommendation request, at least one piece of live streaming studio topic recommendation information that satisfies a preset popularity condition. In this case, in the living streaming process, a popular topic is recommended for live streaming, and technical support is provided for improving the activity and quality of a live video.

## Description

### CROSS-REFERENCE TO RELATED APPLICATIONS

The present application is based on and claims priority of Chinese Application No. 202210108213.0, filed on Jan. 28, 2022 and entitled "LIVE STREAMING STUDIO TOPIC RECOMMENDATION METHOD AND APPARATUS, DEVICE, AND MEDIUM", the disclosure of which is incorporated by reference herein in its entirety.

### TECHNICAL FIELD

The present disclosure relates to the technical field of computer application technologies, and in particular to a live room topic recommendation method and apparatus, a device, and a medium.

### BACKGROUND

In the related technologies, live topics and the like can be explored according to bullet screen messages, so that the live popularity of a live room can be improved.

### SUMMARY

An embodiment of the present disclosure provides a live room topic recommendation method, including the following steps: acquiring a live room topic recommendation request; and determining, according to the live room topic recommendation request, at least one piece of live room topic recommendation information satisfying a preset popularity condition.

An embodiment of the present disclosure provides a live room topic recommendation method, including the following steps: receiving a live room topic recommendation operation; displaying, in response to the live room topic recommendation operation, at least one piece of live room topic recommendation information satisfying a preset popularity condition; receiving a selection operation for the at least one piece of live room topic recommendation information, determining target live room topic recommendation information corresponding to the selection operation, and taking the target live room topic recommendation information as a current topic of the live room.

An embodiment of the present disclosure provides a live room topic recommendation apparatus, including: an acquisition module for acquiring a live room topic recommendation request; a determination module for determining, according to the live room topic recommendation request, at least one piece of live room topic recommendation information satisfying a preset popularity condition.

An embodiment of the present disclosure provides a live room topic recommendation method, including: receiving a live room topic recommendation operation; displaying, in response to the live room topic recommendation operation, at least one piece of live room topic recommendation information satisfying a preset popularity condition; receiving a selection operation for any one or more pieces of live room topic recommendation information in the at least one piece of live room topic recommendation information, and sending the one or more pieces of live room topic recommendation information corresponding to the selection operation for a live streamer end to select target live room topic recommendation information as a current topic of the live room.

An embodiment of the present disclosure provides a live room topic recommendation apparatus, including: a first reception module for receiving a live room topic recommendation operation; a display module for displaying, in response to the live room topic recommendation operation, at least one piece of live room topic recommendation information satisfying a preset popularity condition; a second reception module for receiving a selection operation for the at least one piece of live room topic recommendation information; a topic determination module for determining target live room topic recommendation information corresponding to the selection operation, and taking the target live room topic recommendation information as a current topic of the live room.

An embodiment of the present disclosure provides a live room topic recommendation apparatus, including: a first reception module for receiving a live room topic recommendation operation; a display module for displaying, in response to the live room topic recommendation operation, at least one piece of live room topic recommendation information satisfying a preset popularity condition; a second reception module for receiving a selection operation for the at least one piece of live room topic recommendation information; a sending module for sending one or more pieces of live room topic recommendation information corresponding to the selection operation for a live streamer end to select target live room topic recommendation information as a current topic of the live room.

An embodiment of the present disclosure further provides an electronic device, the electronic device including: a processor; a memory for storing executable instructions for the processor; the processor being used for reading the executable instructions from the memory, and executing the instructions to implement the live room topic recommendation method provided by the embodiment of the present disclosure.

An embodiment of the present disclosure further provides a computer readable storage medium storing a computer program which is used for executing the live room topic recommendation method provided by the embodiment of the present disclosure.

An embodiment of the present disclosure further provides a computer program product, instructions of the computer program product, when executed by a processor, implement the live room topic recommendation method provided by the embodiment of the present disclosure.

An embodiment of the present disclosure further provides a computer program, comprising: instructions, when executed by a processor, cause the processor to execute any of the live room topic recommendation methods provided by the present disclosure.

### BRIEF DESCRIPTION OF THE DRAWINGS

The above and other features, advantages, and aspects of various embodiments of the present disclosure will become more apparent by referring to the following specific implementations when taken in conjunction with the accompanying drawings. Throughout the drawings, the identical or similar reference signs represent the identical or similar elements. It should be understood that the drawings are schematic and that elements and components are not necessarily drawn to scale.
Fig. 1 is a schematic flow diagram of a live room topic recommendation method provided by an embodiment of the present disclosure;
Fig. 2 is a schematic diagram of a live room topic recommendation scene provided by an embodiment of the present disclosure;
Fig. 3 is a schematic flow diagram of another live room topic recommendation method provided by an embodiment of the present disclosure;
Fig. 4 is a schematic diagram of another live room topic recommendation scene provided by an embodiment of the present disclosure;
Fig. 5 is a schematic diagram of another live room topic recommendation scene provided by an embodiment of the present disclosure;
Fig. 6 is a schematic flow diagram of another live room topic recommendation method provided by an embodiment of the present disclosure;
Fig. 7 is a schematic diagram of another live room topic recommendation scene provided by an embodiment of the present disclosure;
Fig. 8 is a schematic diagram of another live room topic recommendation scene provided by an embodiment of the present disclosure;
Fig. 9 is a schematic flow diagram of another live room topic recommendation method provided by an embodiment of the present disclosure;
Fig. 10 is a schematic diagram of another live room topic recommendation scene provided by an embodiment of the present disclosure;
Fig. 11 is a schematic diagram of another live room topic recommendation scene provided by an embodiment of the present disclosure;
Fig. 12 is a schematic diagram of another live room topic recommendation scene provided by an embodiment of the present disclosure;
Fig. 13 is a schematic diagram of another live room topic recommendation scene provided by an embodiment of the present disclosure;
Fig. 14 is a schematic flow diagram of another live room topic recommendation method provided by an embodiment of the present disclosure;
Fig. 15 is a schematic diagram of another live room topic recommendation scene provided by an embodiment of the present disclosure;
Fig. 16 is a schematic structural diagram of a processing apparatus for recommending information provided by an embodiment of the present disclosure;
Fig. 17 a schematic structural diagram of another processing apparatus for recommending information provided by an embodiment of the present disclosure;;
Fig. 18 is a schematic structural diagram of an electronic device provided by an embodiment of the present disclosure.

### DETAILED DESCRIPTION

Embodiments of the present disclosure will be described in more detail below with reference to the accompanying drawings. While certain embodiments of the present disclosure are shown in the drawings, it should be understood that the present disclosure may be implemented in various forms and should not be construed as being limited to the embodiments set forth herein, but rather are provided for a more thorough and complete understanding of the present disclosure. It should be understood that the drawings and the embodiments of the present disclosure are for illustration purposes only and are not intended to limit the scope of the present disclosure.

It should be understood that the various steps recited in method implementations of the present disclosure may be executed in a different order, and/or executed in parallel. Moreover, method implementations can include additional steps and/or omit executing the illustrated steps. The scope of the present disclosure is not limited in this respect.

As used herein, the term "including" and variations thereof are intended to be open-ended, i.e., "including but not limited to". The term "based on" is "based at least in part on"; the term "one embodiment" represents "at least one embodiment"; the term "another embodiment" represents "at least one additional embodiment"; the term "some embodiments" represents "at least some embodiments". Relevant definitions for other terms will be given in the following description.

It should be noted that the "first", "second", and other concepts mentioned in the present disclosure are only used for distinguishing different means, modules or units, and are not used for limiting the order or mutual dependence of the functions executed by these means, modules or units.

It should be noted that references to "one" or "more" mentioned in the present disclosure are intended to be schematic rather than limiting, and that those skilled in the art should understand that it should be understood as "one or more" unless the context clearly indicates otherwise.

The names of messages or information recommended between means in the implementations of the present disclosure are for illustrative purposes only, and are not intended to limit the scope of these messages or information.

In related technologies, it is difficult to explore live topics with high quality and popularity, so that the liveness of a live room is influenced.

In order to solve the above-mentioned problem regarding that the topic popularity of the live room is not high so that the liveness of the live room is influenced, the present disclosure provides a manner of recommending popular topics, which can improve a quality of the live topics and thus enhance the liveness of the live room by recommending live topics with high popularity.

A live room topic recommendation method according to an embodiment of the present disclosure will be described below in combination with a specific embodiment. The method can be applied to a server, which can be a local server or a cloud server, and is not limited herein. The topic in the present embodiment can be any information type guiding the trend of the live topic, such as discussion information and question information, for example, if the live room topic recommendation request is a question-and-answer type topic recommendation request, then the live room topic is a topic on which a live streamer interacts with viewers in the live room, or the like, which is not listed here.

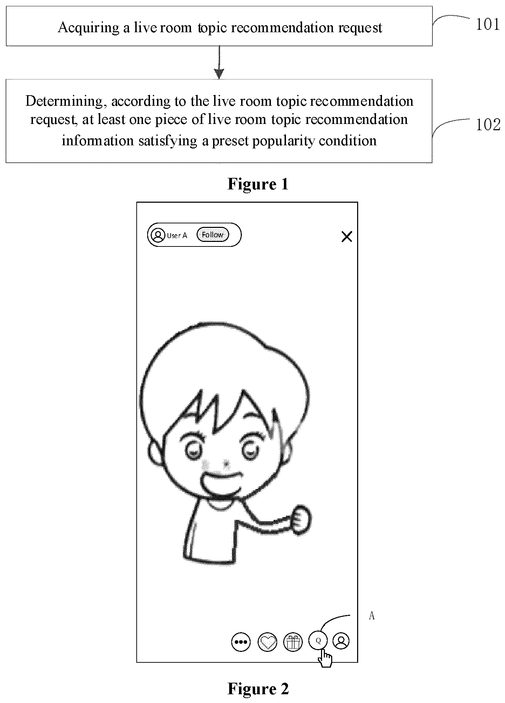

FIG. 1 is a flow diagram of a processing method of recommending information according to some embodiments of the present disclosure. The method is applied in a server. As shown in FIG. 1, the method includes Steps 101 to 102.

Step 101, acquiring a live room topic recommendation request.

Step 102, determining, according to the live room topic recommendation request, at least one piece of live room topic recommendation information satisfying a preset popularity condition.

In the present embodiment, after the live room topic recommendation request is acquired, in order to ensure the topic popularity of the live room so as to improve the liveness of the live room, at least one piece of live room topic recommendation information satisfying a preset popularity condition is determined.

The live room topic recommendation request can originate from a viewer end or a live streamer end.

When the live room topic recommendation request originates from the viewer end, refer to the following description.

In some embodiments of the present disclosure, a live room topic recommendation request corresponding to a viewer end is acquired. As shown in Fig. 2, a trigger control A corresponding to a "recommendation request" can be displayed at the viewer end. If a trigger operation of the viewing user for A is detected, then a live room topic recommendation request corresponding to the viewer end is acquired. For example, if it is detected that the viewing user executes a preset gesture operation on a live interface, then a live room topic recommendation request corresponding to the viewer end is acquired.

In some embodiments, after the live room topic recommendation request corresponding to the viewer end is acquired, according to the live room topic recommendation request corresponding to the viewer end, at least one piece of live room topic recommendation information corresponding to the viewer end that satisfies a preset popularity condition is determined so as to display the at least one piece of live room topic recommendation information at the viewer end.

After the live room topic recommendation request corresponding to the viewer end is acquired, live room topic recommendation information satisfying a preset popularity condition is determined, and the live room topic recommendation information can be understood as high-quality recommendation information which is popular at present. Therefore, a recommended topic with high-quality can be sent.

It should be noted that, in a different application scene, the above preset popularity condition is different, and thus the manner of acquiring the live room topic recommendation information satisfying the preset popularity condition is different, which is exemplified as follows.

In some embodiments of the present disclosure, a topic popularity related parameter of each related candidate topic can be acquired from a preset recommendation platform (for example, if the recommendation information is question-and-answer information, then the corresponding recommendation platform is a question-and-answer platform, etc.) or other platform containing a large amount of topic content items. The topic popularity related parameter comprises one or more of recommendation times the topic has been recommended, acceptance times by the live streamer, and the like corresponding to the topic.

Thus, a popularity value of each candidate topic is determined according to the topic popularity related parameter. For example, when there are a plurality of topic popularity related parameters, normalization processing is performed on each topic popularity related parameter, and all normalized values after the normalization processing are summed to obtain a corresponding popularity value. For example, it is also possible to determine a weight for each topic popularity related parameter, calculate a product value of the normalized value and the weight of each topic popularity related parameter, and take the sum of all the product values as a corresponding popularity value.

After the popularity value of each topic recommendation content item is acquired, a candidate topic content item with the popularity value greater than a preset recommendation threshold is determined as the live room topic recommendation information. Thus, all the live room topic recommendation information is ensured to be high-quality topics with higher popularity.

In some other embodiments of the present disclosure, a deep learning model is pre-trained. The deep learning model can obtain, according to an input topic content item, a topic category of each topic content item and the confidence of the corresponding topic category.

In the present embodiment, in order to ensure the coincidence between the live room topic recommendation information and the live content, after a preset number of candidate topic content items are acquired in order of a ranking list from high to low in a preset recommendation platform, the topic category to which each candidate topic content item belongs and the corresponding confidence are acquired according to the pre-trained deep learning model.

Further, a live room topic category of the live room is determined. The topic category of the live room can be determined according to a type of the live room. Further, among the candidate topic content items, a reference candidate topic content item matched with the live streamer topic is determined. Among the reference candidate topic content items, the live room topic recommendation information with the confidence for pertaining to a corresponding topic category greater than a preset threshold is determined.

In some embodiments, in order to improve the interactive feeling with the viewer end, the viewer end is controlled to display at least one piece of live room topic recommendation information, so that the viewer end can send the related live room topic recommendation information.

It should be noted that, in a different application scene, the manner of controlling the viewer end to display the at least one piece of live room topic recommendation information is different, and an example is as follows.

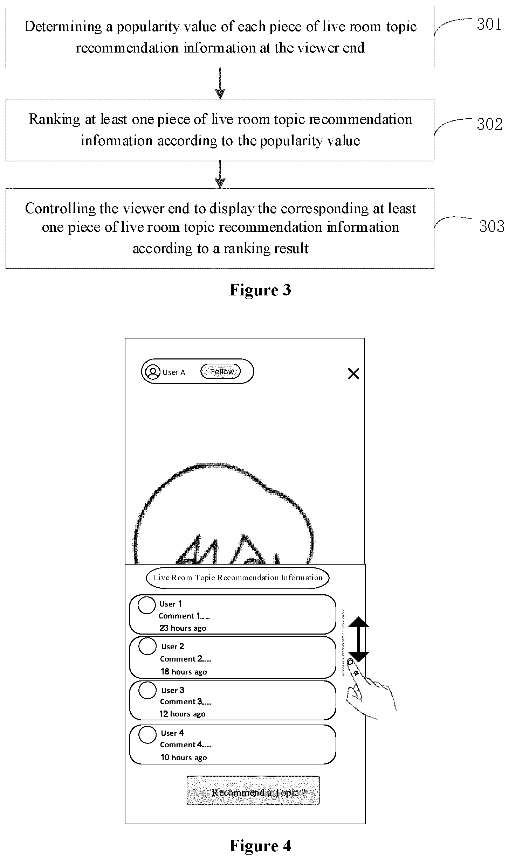

In some embodiments of the present disclosure, as shown in Fig. 3, the viewing client is controlled to display at least one piece of live room topic recommendation information, including Steps 301 to 303.

Step 301, determining a popularity value of each piece of live room topic recommendation information.

In the present embodiment, the popularity value can be determined according to the correlation between the live room topic recommendation information and the type of the live room. Specifically, the popularity value can be predicted based on a preset neural network model, which is not described herein in detail.

Step 302, ranking the at least one piece of live room topic recommendation information according to the popularity value.

Step 303, controlling the viewer end to display the at least one piece of corresponding live room topic recommendation information according to a ranking result.

In the present embodiment, the pieces of live room topic recommendation information can be ranked in an order of the popularity value from high to low, thereby to control the viewer end to display the corresponding live room topic recommendation information according to the ranking result.

In the present embodiment, in order to further improve the recommendation success rate, it is also possible to delete the live room topic recommendation information with the popularity value lower than a certain value and rank only the remaining pieces of live room topic recommendation information. Further, in the present embodiment, the pieces of live room topic recommendation information can be ranked in an order of the popularity value from high to low. For example, the live room topic recommendation information with the popularity value lower than the popularity value threshold can be deleted.

In some other embodiments of the present disclosure, it is also possible to rank the plurality of pieces of live room topic recommendation information in an order of a post time of each piece of the live room topic recommendation information on a corresponding platform from new to old, and then display the corresponding live room topic recommendation information according to the ranking result.

The manner of displaying the live room topic recommendation information according to the ranking result in the above embodiment can be flexibly selected according to requirements of the scene. For example, as shown in Fig. 4, the corresponding live room topic recommendation information can be displayed in form of a list, and a viewing user can switch displaying of the live room topic recommendation information by sliding the corresponding list up and down.

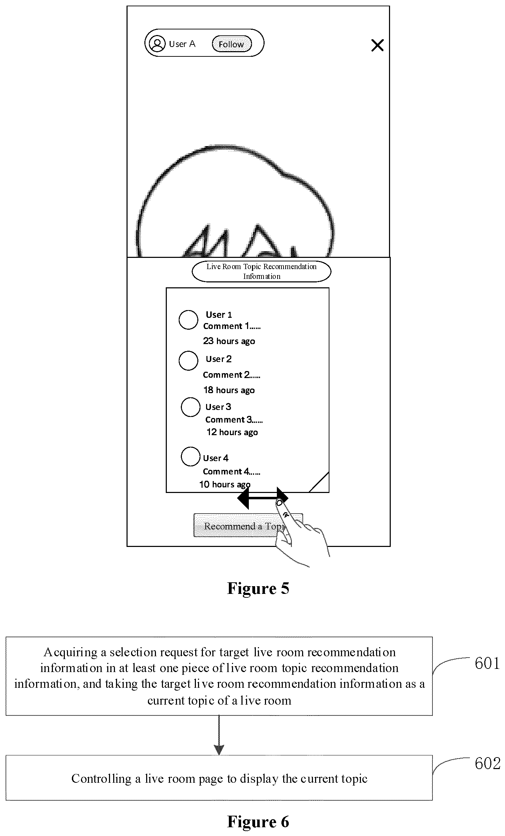

For another example, as shown in Fig. 5, the corresponding live room topic recommendation information can be displayed in a paging form, and the viewing user can switch displaying of the live room topic recommendation information in a manner of flipping pages left and right.

When a live room topic recommendation request originates from the live streamer end, refer to the following description.

In the present embodiment, a live room topic recommendation request corresponding to the live streamer end is acquired. In the present embodiment, the live room topic recommendation request corresponding to the live streamer end is acquired in different manners in different application scenes. For example, a trigger control corresponding to the "recommendation request" can be displayed at the live streamer end, and if a trigger operation on the control at the live streamer end is detected, then the live room topic recommendation request is acquired. For another example, if it is detected that the live streamer end executes a preset gesture operation on the live interface, the live room topic recommendation request and the like are acquired.

After the live room topic recommendation request of the live streamer end is acquired, in order to help the live streamer end find a higher-quality live topic, live room topic recommendation information of the live streamer end is acquired. The live room topic recommendation information includes at least one piece of live room topic recommendation information which is sent by the viewer end. Each piece of live room topic recommendation information is the live room topic recommendation information, for which a sending operation is executed, in the live room topic recommendation information displayed by the corresponding viewer end that satisfies a preset popularity condition.

In the above embodiment, the live room topic recommendation information originates from recommendations of the viewer end.

In some embodiments, in the actual execution process, the live streamer end can also actively require recommendation of live room topics. Thus, even if some pieces of live room topic recommendation information are not recommended by the viewer end, the live streamer end can also learn and adopt them, which thus further avoids the problem of insufficient topics when the live streamer end is on a live.

In the present embodiment, in response to a live room topic recommendation request corresponding to the live streamer end, at least one piece of live room topic recommendation information corresponding to the live streamer end that satisfies a preset popularity condition is determined according to the live room topic recommendation request corresponding to the live streamer end, so that the at least one piece of live room topic recommendation information is displayed at the live streamer end. The recommendation request can be acquired by a live streamer user by triggering a corresponding control, and the like. The preset popularity condition can be acquired in a manner similar to the above popularity condition of the viewer end, and is not described herein in detail again.

To sum up, according to the live room topic recommendation method in the embodiment of the present disclosure, a live room topic recommendation request is acquired, and then, at least one piece of live room topic recommendation information with high popularity that satisfies a preset popularity condition is determined according to the live room topic recommendation request. Thus, popular topics are recommended for live to provide a technical support for improving the liveness and quality of live videos.

In actual applications, after at least one piece of live room topic recommendation information satisfying a preset popularity condition is determined according to the live room topic recommendation request, a current live topic can be determined according to the at least one piece of live room topic recommendation information. Therefore, the popularity of the live topic is ensured, and thus the live popularity of the live room is improved.

In some embodiments of the present disclosure, the current topic can be selected from the recommended live room topic recommendation information.

As shown in FIG. 6, the method further includes Steps 601 to 602.

Step 601, acquiring a selection request for target live room recommendation information in at least one piece of live room topic recommendation information, and taking the target live room recommendation information as a current topic of the live room.

In the present embodiment, a selection request for at least one piece of live room topic recommendation information can be understood as follows: the viewer end triggers a sending operation of a live room topic for at least one of a plurality of pieces of live room topic recommendation information, and then the at least one piece of live room topic recommendation information is sent to the live streamer end, so that the current topic can be selected according to the at least one piece of live room topic recommendation information at the live streamer end. For example, the viewer end selects 5 pieces of live room topic recommendation information from 10 pieces of live room topic recommendation information, and sends the 5 pieces of live room topic recommendation information to the live streamer end, and the live streamer end performs a selection processing of the current topic according to the 5 pieces of live room topic recommendation information.

In different application scenes, a live room topic triggered by the viewer end for at least one of a plurality of pieces of live room topic recommendation information can be selected through a voice operation, a touch operation, or other trigger operation, and then, the triggered live room topic recommendation information is sent to the live streamer end.

Certainly, in some embodiments, the viewer end can have a need to edit the selected live room topic recommendation information. For example, it is possible that the selected live room topic recommendation information does not satisfy the need of the viewer end, and in order to satisfy such need for editing, in some embodiments of the present disclosure, the edited live room topic recommendation information can also be acquired in response to an editing operation of the viewer end for the selected live room topic recommendation information. Further, in response to the sending operation of the viewer end for the edited live room topic recommendation information, the edited live room topic recommendation information is sent to the live streamer end, so that the live streamer end can perform a topic recommendation processing and the like according to the live room topic recommendation information.

In order to make it clear to those skilled in the art, the following example illustrates a related processing process of sending the related live room topic recommendation information to the live streamer end, which is described as follows.

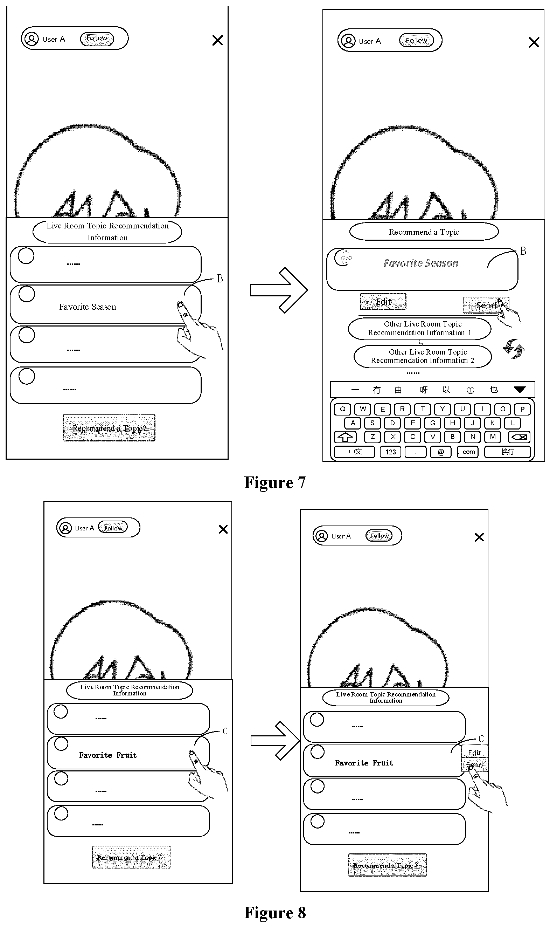

In some embodiments of the present disclosure, as shown in Fig. 7, if the live room topic recommendation information is displayed in form of a list, then if it is detected that a user at the viewer end triggers corresponding live room topic recommendation information B, the corresponding live room topic recommendation information B "favorite season" is displayed in an edit box, and if it is detected that the user triggers a corresponding "sending" control, it is considered that a sending operation of the viewer end for B is acquired. The viewer end is also a viewer end.

With further reference to Fig. 7, in order to further facilitate the selection of the viewer end for the live room topic recommendation information, other live room topic recommendation information can also be displayed on the editing interface, and the viewer end can implement switching of the to-be-sent live room topic recommendation information by clicking the other live room topic recommendation information.

In the present embodiment, it is also possible to edit the selected live room topic recommendation information in the edit box, and then obtain the edited live room topic recommendation information. When the user triggers the corresponding "sending" control, it is considered that the sending operation of the viewer end for the edited live room topic recommendation information is acquired.

For example, as shown in Fig. 8, if the live room topic recommendation information is displayed in form of a list, then if it is detected that the viewer end triggers corresponding live room topic recommendation information C "favorite fruit", a "sending control" and an "editing control" are displayed in an area near the live room topic recommendation information C, and if it is detected that the user at the viewer triggers the corresponding "sending" control, it is regarded that the sending operation of the viewer end for C is acquired.

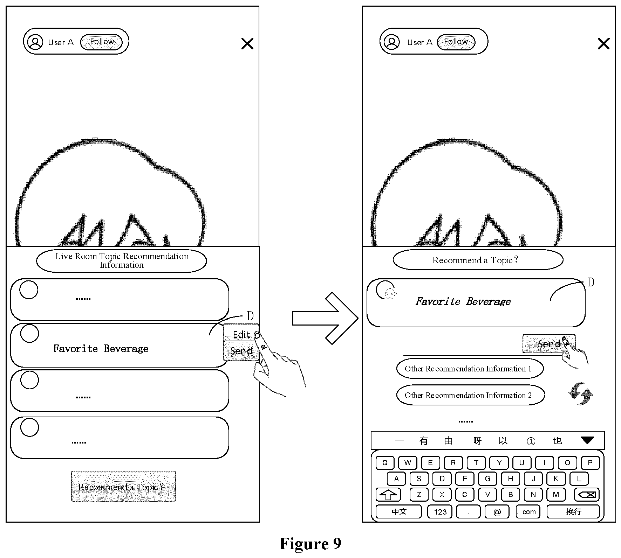

In the present embodiment, if the live room topic recommendation information is displayed in form of a list, then if it is detected that the viewer user triggers corresponding live room topic recommendation information D "favorite beverage", a "sending control" and an "editing control" are displayed in an area near the live room topic recommendation information D. If it is detected that the user at the viewer end triggers the corresponding "editing" control, then it is switched to an editing page to display the corresponding live room topic recommendation information D in the edit box, as shown in Fig. 9, so that the user at the viewer end can edit the live room topic recommendation information to obtain edited live room topic recommendation information. If it is detected that the user triggers the "sending" control of the editing page, a sending operation for the edited live room topic recommendation information is acquired.

Thus, in the live process, popular live topic recommendation information is recommended for the viewer end to provide a technical support for improving the liveness and quality of live videos.

Furthermore, after the live room recommendation information sent by the viewer end is acquired, a selection request for target live room recommendation information in at least one piece of live room topic recommendation information is acquired, and the target live room recommendation information is taken as a current topic of the live room.

In some embodiments of the present disclosure, live room recommendation information sent by the viewer end can be displayed, and the manner of displaying the live room recommendation information sent by the viewer end can be a list display, a paging display, or the like according to a different scene.

In some embodiments of the present disclosure, for convenience of the live streamer end to quickly find a live streamer topic with higher-quality so as to improve the quality of live , it is possible to acquire a second popularity value of each piece of live room topic recommendation information sent by a viewer end, then rank the at least one piece of live room topic recommendation information according to the second popularity value, and control the live streamer end to display the at least one piece of live room topic recommendation information according to a ranking result. Thus, the live streamer user can first see the live room topic recommendation information with higher popularity.

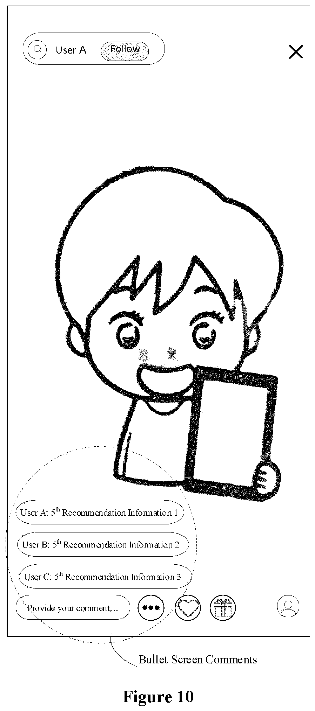

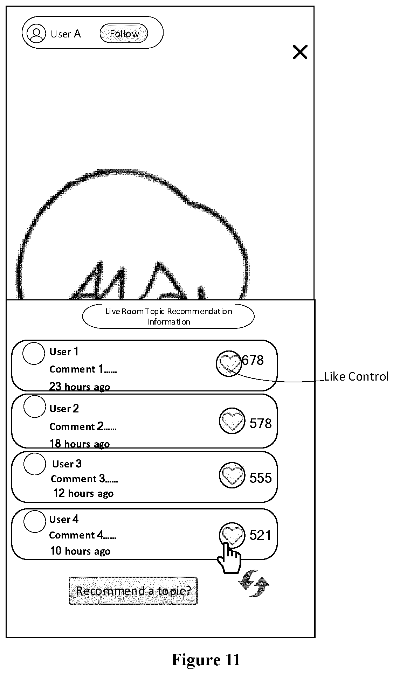

In some embodiments of the present disclosure, after the live streamer end receives at least one piece of live room topic recommendation information sent by the viewer end, the live room is directly controlled to display all pieces of live room topic recommendation information sent by the viewer end. In some embodiments, the at least one piece of live room topic recommendation information can be displayed according to a preset display manner, and the preset display manner can be set according to requirements of a scene. For example, it can be in form of a bullet screen comment as shown in Fig. 10. As another example, it can be displayed as a corresponding recommendation list as shown in Fig. 11.

Furthermore, a recommendation operation of viewing users of the viewer end for all pieces of live room topic recommendation information sent by the viewer end is acquired. The recommendation operation can be a trigger operation for a like control of the bullet screen comment shown in Fig. 10, or a trigger operation for a like control of the live room topic recommendation information shown in Fig. 11, or the like. Further, according to the recommendation operation, a popularity value of the corresponding all pieces of live room topic recommendation information sent by the viewer end is acquired, and the popularity value can be the number of the above-mentioned likes, or the like.

In some embodiments of the present disclosure, in order to optimize recommended target live room recommendation information, some pieces of target live room recommendation information irrelevant to the live content item of the current live room can be deleted before the live streamer end is controlled to display the target live room recommendation information.

For example, semantic information of each piece of target live room recommendation information sent by the viewer end is acquired, a first topic and a corresponding topic confidence of the each piece of target live room recommendation information are identified according to the semantic information, and a second topic of a live room is identified. The second topic can be obtained according to the live type. After the pieces of target live room recommendation information matched with the second topic are determined, topic confidences corresponding to the pieces of matched target live room recommendation information are determined, and the pieces of target live room recommendation information with the topic confidence greater than a certain value are displayed.

In some embodiments, after the target live room recommendation information sent by the viewer end is displayed, a selection request for the target live room recommendation information in at least one piece of live room topic recommendation information is acquired, and the target live room recommendation information is taken as a current topic of the live room.

In the present embodiment, in response to a selection request for the target live room recommendation information, the selection request can be acquired by triggering an area where the corresponding target live room topic recommendation information is located, or the like.

Step 602, controlling a live room page to display the current topic. The live room page can be a live room page at the live streamer end or at the viewer end.

In the present embodiment, a live room page is controlled to display a current topic, and a selection prompt message indicates the current topic being discussed in the live room.

The current topic being discussed originates from popular topics, which thus ensures the professional degree, the topic popularity and the like of live .

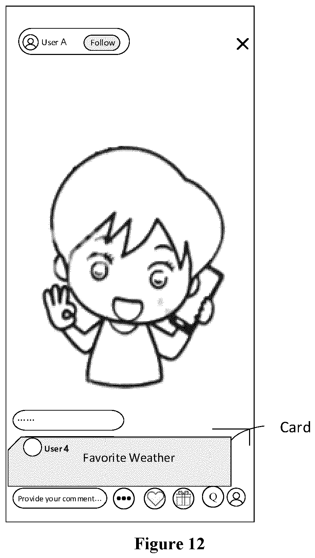

The manner of displaying a current topic is different in a different application scene. In some embodiments, the current topic can be displayed in form of a card. As shown in Fig. 12, if the selected current topic is "favorite weather", then the content of the topic can be displayed in form of a card at the bottom of the current live room, to visually indicate a current live content item for the live streamer user and the viewer users.

In some possible embodiments, it is also possible to display a prompt message following the corresponding target live room recommendation information when displaying at least one piece of live room topic recommendation information, so as to prompt live users of the recommendation information on a live at present and avoid a repeated selection of the target live room recommendation information. In the present embodiment, in order to further avoid a repeated selection of target live room recommendation information, it is also possible to delete the target live room recommendation information that has been selected and discussed by the live streamer user from the displayed list. It is possible to know that the steamer user has finished discussion on the target live room recommendation information according to a close operation or the like by the live streamer user for the related prompt message displayed on the live interface.

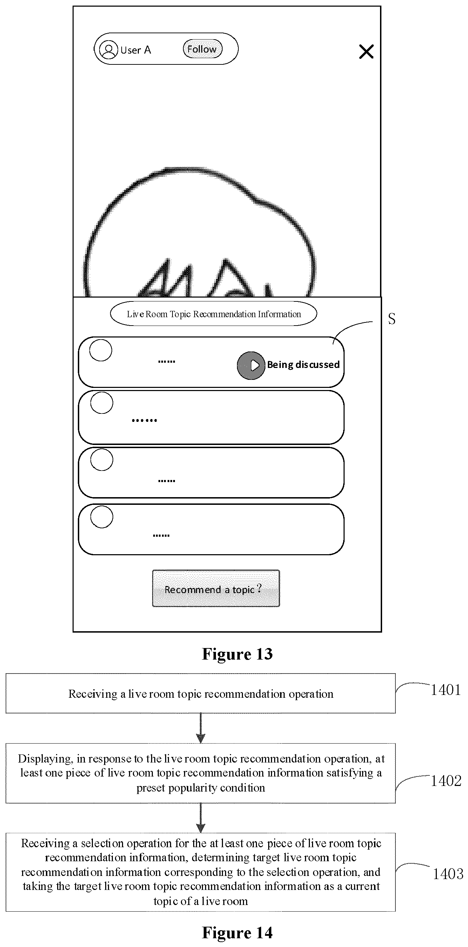

For example, as shown in Fig. 13, if it is received that the live streamer user selects target live room recommendation information S, then a prompt message such as "being discussed" is displayed at a preset position of an area where S is located, so as to indicate the target live room recommendation information being discussed at present.

To sum up, the live room topic recommendation method of the embodiment of the present disclosure determines the current topic of live steaming from the live room topic recommendation information of people as recommended, which ensures the popularity of the topic of the live room and improves the quality of the live room.

In order to more fully describe the live room topic recommendation method of the embodiment of the present disclosure, the live room topic recommendation method of the embodiment of the present disclosure is described below mainly from the respective of the client, where the client can be a live streamer end or a viewer end.

In the present embodiment, the client selects a current topic from currently popular live room topic recommendation information, which thus improves the topic popularity of the live room and ensures the quality of live .

In the present embodiment, as shown in Fig. 14, the method further includes Steps 1401 to 1403.

Step 1401, receiving a live room topic recommendation operation.

In the present embodiment, the live room topic recommendation operation can be acquired by a related user triggering a corresponding control, or acquired by a related user executing a preset gesture operation at a client, which is not listed in detail here.

Step 1402, displaying, in response to the live room topic recommendation operation, at least one piece of live room topic recommendation information satisfying a preset popularity condition.

In the present embodiment, at least one piece of live room topic recommendation information satisfying a preset popularity condition is displayed, and the at least one piece of live room topic recommendation information is acquired by the above server. In the present embodiment, after the live room topic recommendation operation is acquired, a topic recommendation request is sent to the server, at least one piece of live room topic recommendation information satisfying a preset popularity condition, which is fed back by the server according to the request, is received, and the at least one piece of live room topic recommendation information satisfying the preset popularity condition is displayed.

The manner of displaying at least one piece of live room topic recommendation information at the client can be a paging display, a sliding display, or the like, which is not limited herein.

Step 1403, receiving a selection operation for the at least one piece of live room topic recommendation information, determining target live room topic recommendation information corresponding to the selection operation, and taking the target live room topic recommendation information as the current topic of a live room.

In the present embodiment, target live room topic recommendation information determined by a client from at least one piece of live room topic recommendation information is received, and the target live room topic recommendation information is taken as a current topic of a live room. Thus, the active acquisition for the live topic is realized, and liveness of the live of the live room is improved.

It should be noted that, the manner of determining the target live room topic recommendation information from the at least one piece of live room topic recommendation information is different according to a different application scene, and an example is described below.

In some embodiments of the present disclosure, a user of the client can also actively select target live room topic recommendation information in the recommended at least one piece of live room topic recommendation information, that is, in response to receiving a trigger operation for the target live room topic recommendation information in the at least one piece of live room topic recommendation information, determine target live room topic recommendation information corresponding to the trigger operation.

In some embodiments of the present disclosure, after the corresponding at least one piece of live room topic recommendation information is acquired, a random selection control can be displayed. The random selection control can be one of pictures, characters, animations and the like, or a combination of more than one thereof. A trigger operation of a related user of the client for the random selection control is acquired, and target live room topic recommendation information in the at least one piece of live room topic recommendation information is determined according to a preset random algorithm. The preset random algorithm can be any one of random selection algorithms in the prior art. Thus, a related user can determine, without manual selection, one piece of target live room topic recommendation information, which brings interestingness to the live content.

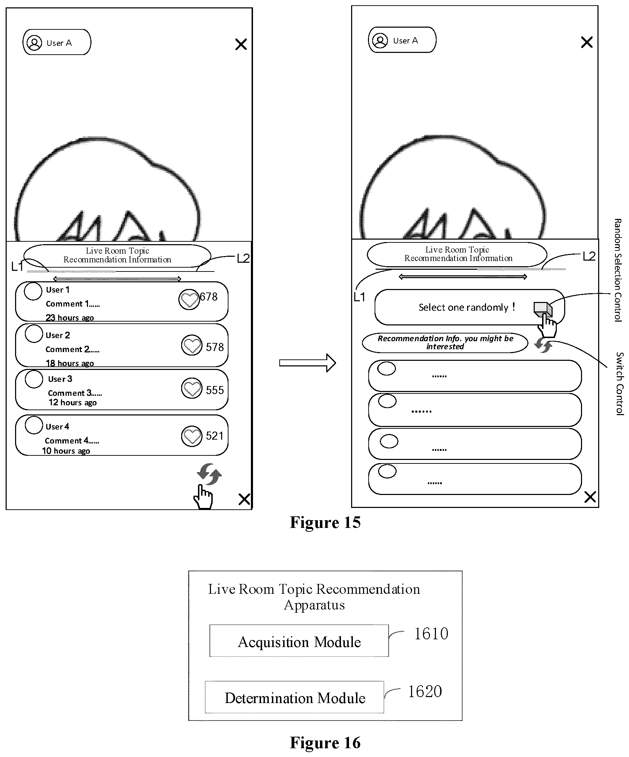

In consideration of some scenes, in which if a user is not interest in the displayed at least one piece of live room topic recommendation information satisfying the preset popularity condition, a live room topic recommendation update operation can be received. For example, when a trigger operation for a "switching" control in Fig. 15 is received, the updated at least one piece of live room topic recommendation information satisfying the preset popularity condition is displayed. The updated at least one piece of live room topic recommendation information can be the remaining at least one piece of live room topic recommendation information which is not fully displayed at present, or can be acquired again by matching according to the preset popularity condition, and the like. And then, a trigger operation for target live room topic recommendation information in the updated at least one piece of live room topic recommendation information is received, and the target live room topic recommendation information is taken as a current topic of the live room.

In the above embodiment, after the trigger operation for the target live room topic recommendation information in the at least one piece of live room topic recommendation information is received, the target live room topic recommendation information is displayed in the topic editing area. In response to the editing operation for the target live room topic recommendation information displayed in the topic editing area, the adjusted target live room topic recommendation information is acquired, and the adjusted target live room topic recommendation information is taken as a current topic for display or the like. The editing operation for the target live room topic recommendation information displayed in the topic editing area can refer to the editing operation of the viewer end for the selected live room topic recommendation information as mentioned in the above embodiment, which is not described in detail herein again.

In the present embodiment, an editing operation can be performed for the target live room topic recommendation information, which thus further ensures the flexibility of selection of the current topic while giving consideration to the recommendation of the popular topic and the live effect of the live streamer user.

As described above, the live room topic recommendation information displayed at the live streamer end can originate not only from recommendations of the viewer end, but also from an automatic request of the live streamer end. Therefore, in order to avoid the complexity of the operation and improve the operation experience, in the present embodiment, the live room topic recommendation information from different sources can be displayed in a switchable dual-column form. That is, as shown in Fig. 15, the live room topic recommendation information originating from recommendations of the viewer end can be displayed in the left column L1 at the live streamer end, and the live room topic recommendation information originating from an automatic request of the live streamer end can be displayed in the right column L2. The L1 and L2 can be switched to be displayed in a switching manner, or can be displayed simultaneously. For example, the L1 and L2 are displayed in upper and lower pages, or in left and right screens.

To sum up, the live room topic recommendation method in the embodiment of the present disclosure can perform live according to the live room topic recommendation information recommended by the viewer end, or can actively request popular live room topic recommendation information for live , which ensures the popularity of the current topic of the live and ensures the live quality.

In the embodiment of the present disclosure, the at least one piece of live room topic recommendation information corresponding to the live streamer end or the viewer end can be acquired in response to an input operation of the live streamer end or the viewer end, or can be acquired in response to a modification of the live streamer end or the viewer end for the live room topic recommendation information which has been displayed, or can be issued by a live server. The live room topic recommendation information can also be obtained according to the popularity of the comment information of the live room, and the popularity of the live room comment information can be determined according to the number of identical or similar comments in a preset time range. The similar comments can be comments whose similarity is greater than a preset similarity threshold, and the similarity can be determined based on a preset neural network model.

In addition, the viewer end can send one or more pieces of live room topic recommendation information to the live server, and the live server sends the one or more pieces of live room topic recommendation information to the live streamer end for display at the live streamer end, so as to allow the live streamer end to select the target live room topic recommendation information. The live streamer end can also send a plurality of pieces of live room topic recommendation information to the live server, and the live server sends the plurality of pieces of live room topic recommendation information to the viewer end for display at the viewer end, so as to allow the viewer end to interact with the plurality of pieces of live room topic recommendation information, and determine the target live room topic recommendation information according to an interaction result.

In some embodiments, the method of the present disclosure (applied to the viewer end) further includes: displaying a plurality of pieces of live room topic recommendation information, and displaying an interaction control and interaction information (the interaction control is for example a like control, and the interaction information is for example amount of likes) of each piece of live room topic recommendation information; updating the interaction information of the each piece of live room topic recommendation information in response to the trigger operation for the interaction control of the each piece of live room topic recommendation information; and sending the interaction information of the each piece of live room topic recommendation information to a live server, so that the live server generates at least one piece of live room topic recommendation information to be pushed to a live streamer end for the live streamer end to select.

In order to implement the above embodiment, the present disclosure further provides a live room topic recommendation apparatus.

Fig. 16 is a schematic structural diagram of a live room topic recommendation apparatus provided by an embodiment of the present disclosure, where the apparatus can be implemented by software and/or hardware. As shown in Fig. 16, the apparatus includes an acquisition module 1610 and a determination module 1620.

The acquisition module 1610 is used for acquiring a live room topic recommendation request.

The determination module 1620 is used for determining, according to the live room topic recommendation request, at least one piece of live room topic recommendation information satisfying a preset popularity condition.

The live room topic recommendation apparatus provided by the embodiment of the present disclosure can execute the live room topic recommendation method provided by any embodiment of the present disclosure, has corresponding functional modules for executing the method and beneficial effects, and has a similar implementation principle, which is not repeated herein.

In order to implement the above embodiment, the present disclosure further provides a live room topic recommendation apparatus.

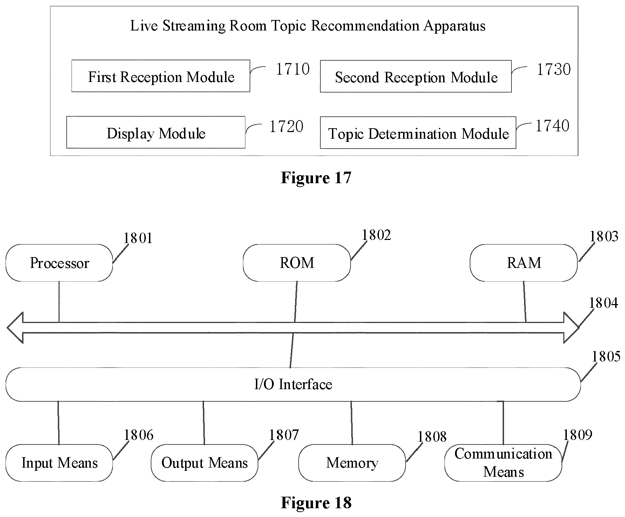

Fig. 17 is a schematic structural diagram of a live room topic recommendation apparatus provided by an embodiment of the present disclosure, wherein the apparatus can be implemented by software and/or hardware. As shown in Fig. 17, the apparatus includes a first reception module 1710, a display module 1720, a second reception module 1730, and a topic determination module 1740.

The first reception module 1710 is used for receiving a live room topic recommendation operation.

The display module 1720 is used for displaying, in response to the live room topic recommendation operation, at least one piece of live room topic recommendation information satisfying a preset popularity condition.

The second reception module 1730 is used for receiving a selection operation for at least one piece of live room topic recommendation information.

The topic determination module 1740 is used for determining target live room topic recommendation information corresponding to the selection operation, and taking the target live room topic recommendation information as a current topic of the live room.

The live room topic recommendation apparatus provided by the embodiment of the present disclosure can execute the live room topic recommendation method provided by any embodiment of the present disclosure, has corresponding functional modules for executing the method and beneficial effects, and has a similar implementation principle, which is not repeated herein.

Fig. 18 is a schematic structural diagram of an electronic device provided by an embodiment of the present disclosure.

Referring now specifically to Fig. 18, a schematic structural diagram of an electronic device 1800 adaptive for implementing an embodiment of the present disclosure is shown. The electronic device 1800 in the embodiment of the present disclosure can include, but is not limited to, mobile terminals such as a mobile phone, a notebook computer, a digital broadcast receiver, a personal digital assistant (PDA), a tablet computer (PAD), a portable multimedia player (PMP), a vehicle mounted terminal (e.g., a vehicle mounted navigation terminal), and the like, as well as fixed terminals such as a digital TV, a desktop computer, and the like. The electronic device shown in Fig. 18 is only an example, and should not bring any limitation to the functions and the scope of use of the embodiment of the present disclosure.

As shown in Fig. 18, the electronic device 1800 can include a processor (e.g., a central processor, a graphics processor, etc.) 1801, which can perform various appropriate actions and processes according to programs stored in a read only memory (ROM) 1802 or programs loaded from the memory 1808 onto the random access memory (RAM) 1803. The RAM 1803 also stores various programs and data necessary for the operation of the electronic device 1800. The processor 1801, ROM 1802, and RAM 1803 are connected to each other via a bus 1804. An input/output (I/O) interface 1805 is also connected to the bus 1804.

Generally, the following means can be connected to the I/O interface 1805: input means 1806 including, for example, a touch screen, a touch pad, a keyboard, a mouse, a camera, a microphone, an accelerometer, a gyroscope, and the like; output means 1807 including, for example, a liquid crystal display (LCD), a speaker, a vibrator, and the like; a memory 1808 including, for example, a magnetic tape, a hard disk, and the like; and a communication means 1809. The communication means 1809 can allow the electronic device 1800 to perform wireless or wired communication with other devices, so as to exchange data. While Fig. 18 illustrates an electronic device 1800 having various means, it should be understood that not all illustrated means are required to be implemented or provided. More or fewer means can be alternatively implemented or provided.

In particular, the process described above with reference to the flow diagrams can be implemented as a computer software program, according to the embodiment of the present disclosure. For example, the embodiment of the present disclosure includes a computer program product comprising a computer program carried on a non-transitory computer readable medium, the computer program containing program code for executing the method illustrated by the flow diagram. In such an embodiment, the computer program can be downloaded and installed from a network through the communication means 1809, or installed from the memory 1808, or installed from the ROM 1802. The computer program, when executed by the processor 1801, executes the above functions defined in the live room topic recommendation method of the embodiments of the present disclosure.

It should be noted that the computer readable medium of the present disclosure can be a computer readable signal medium or a computer readable storage medium or any combination of both the above. The computer readable storage medium can be, for example, but not limited to, an electronic, magnetic, optical, electromagnetic, infrared, or semiconductor system, apparatus, or device, or any combination of the above. More specific examples of the computer readable storage medium can include, but are not limited to: an electrical connection having one or more wires, a portable computer diskette, a hard disk, a random access memory (RAM), a read only memory (ROM), an erasable programmable read only memory (EPROM or flash memory), an optical fiber, a portable compact disc read only memory (CD-ROM), an optical storage device, a magnetic storage device, or any suitable combination of the above. In the present disclosure, the computer readable storage medium can be any tangible medium that contains or stores a program for use by or in connection with an instruction execution system, apparatus, or device. In contrast, in the present disclosure, the computer readable signal medium can include a propagated data signal with computer readable program code carried therein, for example, in a baseband or as part of a carrier wave. Such a propagated data signal can take a variety of forms, including, but not limited to, an electro-magnetic signal, an optical signal, or any appropriate combination of the above. The computer readable signal medium can also be any computer readable medium other than the computer readable storage medium, and can send, propagate, or transport a program for use by or in connection with an instruction execution system, apparatus, or device. Program code contained on a computer readable medium can be transported using any appropriate medium, including but not limited to: electrical wires, optical cables, RF (radio frequency), etc., or any appropriate combination of the above.

In some implementations, clients and servers can communicate using any currently known or future developed network Protocol, such as the HyperText Transfer Protocol (HTTP), and can be interconnected with any form or medium of digital data communication (e.g., a communication network). Examples of the communication network include a local area network ("LAN"), a wide area network ("WAN"), the Internet (e.g., the Internet), and a peer-to-peer network (e.g., an ad hoc peer-to-peer network), and any currently known or future developed network.

The above computer readable medium can be contained in the above electronic device, or can be separate and not incorporated into the electronic device.

The above computer readable medium carries one or more programs which, when executed by an electronic device, cause the electronic device to:
acquire a live room topic recommendation request, and then determine, according to the live room topic recommendation request, at least one piece of live room topic recommendation information with high popularity that satisfies a preset popularity condition. Thus, popular topics are recommended for live , which provides a technical support for improving the liveness and quality of live videos.

The electronic device can write computer program code for executing the operations of the present disclosure in one or more programming languages or a combination thereof. The above programming language includes but is not limited to an object oriented programming language such as Java, Smalltalk, C++, as well as a conventional procedural programming language such as the "C" programming language or similar programming languages. The program code can be executed entirely on a user computer, partly on the user computer, as a stand-alone software package, partly on the user computer and partly on a remote computer, or entirely on the remote computer or server. In the circumstance where a remote computer is involved, the remote computer can be connected to the user computer via any type of network, including a local area network (LAN) or a wide area network (WAN), or can be connected to an external computer (for example, connected via the Internet using an Internet service provider).

The flow diagrams and block diagrams in the figures illustrate the architecture, functions, and operations of possible implementations of the system, the method and the computer program product according to various embodiments of the present disclosure. In this regard, each block in the flow diagrams or block diagrams can represent a module, a program segment, or a portion of code, which contains one or more executable instructions for implementing the specified logical function(s). It should also be noted that, in some alternative implementations, the functions labeled in the block can occur out of the order labeled in the figures. For example, two blocks shown in succession can, in fact, be executed substantially concurrently, or can sometimes be executed in the reverse order, depending upon the functions involved. It will also be noted that each block or a combination of blocks in the block diagrams and/or flow diagrams can be implemented by a special purpose hardware-based system that executes the specified functions or operations, or by combinations of special purpose hardware and computer instructions.

The involved units described in the embodiments of the present disclosure can be implemented by means of software or hardware. The name of a unit does not in some cases constitute a limitation on the unit itself.

The functions described herein above can be executed, at least in part, by one or more hardware logic components. For example, without limitation, exemplary types of hardware logic components that can be used include: field programmable gate arrays (FPGAs), application specific integrated circuits (ASICs), application specific standard products (ASSPs), systems on a chip (SOCs), complex programmable logic devices (CPLDs), and the like.

In the context of the present disclosure, a machine readable medium can be a tangible medium that can contain or store a program for use by or in connection with an instruction execution system, apparatus, or device. The machine readable medium can be a machine readable signal medium or a machine readable storage medium. The machine readable medium can include, but is not limited to, an electronic, magnetic, optical, electromagnetic, infrared, or semiconductor system, apparatus, or device, or any appropriate combination of the above. More specific examples of the machine readable storage medium would include an electrical connection based on one or more wires, a portable computer diskette, a hard disk, a random access memory (RAM), a read only memory (ROM), an erasable programmable read only memory (EPROM or flash memory), an optical fiber, a portable compact disc read only memory (CD-ROM), an optical storage device, a magnetic storage device, or any appropriate combination of the above.

According to one or more embodiments of the present disclosure, the present disclosure provides a live room topic recommendation method, including the following steps:
acquiring a live room topic recommendation request;
determining, according to the live room topic recommendation request, at least one piece of live room topic recommendation information satisfying a preset popularity condition.

According to one or more embodiments of the present disclosure, in the live room topic recommendation method provided by the present disclosure, the acquiring a live room topic recommendation request includes:
acquiring a live room topic recommendation request corresponding to a viewer end;
the determining, according to the live room topic recommendation request, live room topic recommendation information satisfying a preset popularity condition includes:
determining, according to the live room topic recommendation request corresponding to the viewer end, at least one piece of live room topic recommendation information corresponding to the viewer end that satisfies a preset popularity condition, so as to display the at least one piece of live room topic recommendation information at the viewer end.

According to one or more embodiments of the present disclosure, the live room topic recommendation method provided by the present disclosure includes:
acquiring a live room topic recommendation request corresponding to a live streamer end;
the determining, according to the live room topic recommendation request, live room topic recommendation information satisfying a preset popularity condition includes:
determining, according to the live room topic recommendation request corresponding to the live streamer end, at least one piece of live room topic recommendation information corresponding to the live streamer end that satisfies a preset popularity condition, so as to display the at least one piece of live room topic recommendation information at the live streamer end.

According to one or more embodiments of the present disclosure, the live room topic recommendation method provided by the present disclosure further includes:
acquiring a selection request for target live room recommendation information in the at least one piece of live room topic recommendation information, and taking the target live room recommendation information as a current topic of the live room;
controlling displaying of the current topic.

According to one or more embodiments of the present disclosure, in the live room topic recommendation method provided by the present disclosure, the live room topic recommendation request is a question-and-answer type topic recommendation request, and the live room topic is a topic on which a live streamer interacts with viewers in a live room.

According to one or more embodiments of the present disclosure, the live room topic recommendation method provided by the present disclosure is executed by a server.

According to one or more embodiments of the present disclosure, the live room topic recommendation method provided by the present disclosure includes:
receiving a live room topic recommendation operation;
displaying, in response to the live room topic recommendation operation, at least one piece of live room topic recommendation information satisfying a preset popularity condition;
receiving a selection operation for the at least one piece of live room topic recommendation information, determining target live room topic recommendation information corresponding to the selection operation, and taking the target live room topic recommendation information as a current topic of the live room.

According to one or more embodiments of the present disclosure, in the live room topic recommendation method provided by the present disclosure, the receiving a selection operation for the at least one piece of live room topic recommendation information and determining target live room topic recommendation information corresponding to the selection operation includes:
receiving a trigger operation for target live room topic recommendation information in at least one piece of live room topic recommendation information;
determining target live room topic recommendation information corresponding to the trigger operation.

According to one or more embodiments of the present disclosure, in the live room topic recommendation method provided by the present disclosure, the receiving a selection operation for the at least one piece of live room topic recommendation information and determining target live room topic recommendation information corresponding to the selection operation includes:
determining, in response to a trigger operation for a preset random selection control, target live room topic recommendation information in at least one piece of live room topic recommendation information according to a preset random algorithm.

According to one or more embodiments of the present disclosure, after displaying at least one piece of live room topic recommendation information satisfying a preset popularity condition, the live room topic recommendation method provided by the present disclosure further includes:
receiving a live room topic recommendation update operation;
displaying updated at least one piece of live room topic recommendation information satisfying a preset popularity condition;
receiving a trigger operation for target live room topic recommendation information in the updated at least one piece of live room topic recommendation information, and taking the target live room topic recommendation information as a current topic of the live room.

According to one or more embodiments of the present disclosure, the live room topic recommend method provided by the present disclosure further includes:
receiving a trigger operation for target live room topic recommendation information in at least one piece of live room topic recommendation information, and displaying the target live room topic recommendation information in a topic editing area;
acquiring, in response to an edition operation for the target live room topic recommendation information displayed in the topic editing area, adjusted target live room topic recommendation information.

According to one or more embodiments of the present disclosure, the live room topic recommendation method provided by the present disclosure is executed by a client.

According to one or more embodiments of the present disclosure, the present disclosure provides a live room topic recommendation method, including:
receiving a live room topic recommendation operation;
displaying, in response to the live room topic recommendation operation, at least one piece of live room topic recommendation information satisfying a preset popularity condition;
receiving a selection operation for any one or more pieces of live room topic recommendation information in the at least one piece of live room topic recommendation information, and sending the one or more pieces of live room topic recommendation information corresponding to the selection operation for a live streamer end to select target live room topic recommendation information as a current topic of the live room.

According to one or more embodiments of the present disclosure, the live room topic recommendation method provided by the present disclosure further includes:
receiving a trigger operation for the one or more pieces of live room topic recommendation information corresponding to the selection operation, and displaying the one or more pieces of live room topic recommendation information in a topic editing area; acquiring, in response to an edition operation for the one or more pieces of live room topic recommendation information displayed in the topic editing area, one or more pieces of adjusted live room topic recommendation information corresponding to the selection operation;
the sending the one or more pieces of live room topic recommendation information corresponding to the selection operation including: sending the one or more pieces of adjusted live room topic recommendation information corresponding to the selection operation.

According to one or more embodiments of the present disclosure, the live room topic recommendation method provided by the present disclosure further includes:
displaying an interaction control and interaction information of the at least one piece of live room topic recommendation information;
updating, in response to a trigger operation for the interaction control of the at least one piece of live room topic recommendation information, the interaction information of the at least one piece of live room topic recommendation information;
sending the interaction information of the at least one piece of live room topic recommendation information to a live server, so that the live server generates at least one piece of live room topic recommendation information to be pushed to a live streamer end for the live streamer end to select target live room topic recommendation information as a current topic of the live room.

According to one or more embodiments of the present disclosure, the present disclosure provides a live room topic recommendation apparatus, including:
an acquisition module for acquiring a live room topic recommendation request;
a determination module for determining, according to the live room topic recommendation request, at least one piece of live room topic recommendation information satisfying a preset popularity condition.

According to one or more embodiments of the present disclosure, in the live room topic recommendation apparatus provided by the present disclosure, the acquisition module is specifically used for:
acquiring a live room topic recommendation request corresponding to a viewer end;
the determination module is specifically used for:
determining, according to the live room topic recommendation request corresponding to the viewer end, at least one piece of live room topic recommendation information corresponding to the viewer end that satisfies a preset popularity condition, so as to display the at least one piece of live room topic recommendation information at the viewer end.

According to one or more embodiments of the present disclosure, in the live room topic recommendation apparatus provided by the present disclosure, the acquisition module is specifically used for:
acquiring a live room topic recommendation request corresponding to a live streamer end;
the determination module is specifically used for:
determining, according to the live room topic recommendation request corresponding to the live streamer end, at least one piece of live room topic recommendation information corresponding to the live streamer end that satisfies a preset popularity condition, so as to display the at least one piece of live room topic recommendation information at the live streamer end.

According to one or more embodiments of the present disclosure, the live room topic recommendation apparatus provided by the present disclosure further includes:
a first request acquisition module for acquiring a selection request for target live room recommendation information in the at least one piece of live room topic recommendation information, and taking the target live room recommendation information as a current topic of the live room;
a first topic display module for controlling a live roompage to display the current topic.

According to one or more embodiments of the present disclosure, in the live room topic recommendation apparatus provided by the present disclosure, the live room topic recommendation request is a question-and-answer type topic recommendation request, and the live room topic is a topic on which a live streamer interacts with viewers in a live room.

According to one or more embodiments of the present disclosure, the present disclosure provides a live room topic recommendation apparatus, including:
a first reception module for receiving a live room topic recommendation operation;
a display module for displaying, in response to the live room topic recommendation operation, at least one piece of live room topic recommendation information satisfying a preset popularity condition;
a second reception module for receiving a selection operation for the at least one piece of live room topic recommendation information;
a topic determination module for determining target live room topic recommendation information corresponding to the selection operation, and taking the target live room topic recommendation information as a current topic of the live room. According to one or more embodiments of the present disclosure, in the live room topic recommendation apparatus provided by the present disclosure, the live room topic recommendation apparatus is specifically used for:
receiving a trigger operation for target live room topic recommendation information in at least one piece of live room topic recommendation information;
determining target live room topic recommendation information corresponding to the trigger operation.

According to one or more embodiments of the present disclosure, in the live room topic recommendation apparatus provided by the present disclosure, the live room topic recommendation apparatus block is specifically used for:
determining, in response to a trigger operation for a preset random selection control, target live room topic recommendation information in at least one piece of live room topic recommendation information according to a preset random algorithm.

According to one or more embodiments of the present disclosure, the live room topic recommendation apparatus provided by the present disclosure further includes:
a first request acquisition module for receiving a live room topic recommendation update operation;
a second topic display module for displaying at least one piece of updated live room topic recommendation information satisfying a preset popularity condition;
a topic determination module for receiving a trigger operation for target live room topic recommendation information in the at least one piece of updated live room topic recommendation information, and taking the target live room topic recommendation information as a current topic of the live room.

According to one or more embodiments of the present disclosure, the live room topic recommendation apparatus provided by the present disclosure further includes:
a second request acquisition module for receiving a trigger operation for target live room topic recommendation information in at least one piece of live room topic recommendation information, and displaying the target live room topic recommendation information in a topic editing area;
a recommendation information acquisition module for acquiring, in response to an edition operation for the target live room topic recommendation information displayed in the topic editing area, adjusted target live room topic recommendation information.

According to one or more embodiments of the present disclosure, the present disclosure provides a live room topic recommendation apparatus, including:
a first reception module for receiving a live room topic recommendation operation;
a display module for displaying, in response to the live room topic recommendation operation, at least one piece of live room topic recommendation information satisfying a preset popularity condition;
a second reception module for receiving a selection operation for the at least one piece of live room topic recommendation information;
a sending module for sending one or more pieces of live room topic recommendation information corresponding to the selection operation for a live streamer end to select target live room topic recommendation information as a current topic of the live room.

According to one or more embodiments of the present disclosure, the present disclosure provides an electronic device, including:
a processor;
a memory for storing executable instructions for the processor;
the processor being used for reading the executable instructions from the memory, and executing the instructions to implement the live room topic recommendation methods provided by any embodiment of the present disclosure.

According to one or more embodiments of the present disclosure, the present disclosure provides a computer readable storage medium storing a computer program which is used for executing the live room topic recommendation methods provided by any embodiment of the present disclosure.

According to one or more embodiments of the present disclosure, the present disclosure provides a computer program product, instructions of the computer program product, when executed by a processor, implement the live room topic recommendation method provided by any embodiment of the present disclosure.

According to one or more embodiments of the present disclosure, the present disclosure provides a computer program, comprising: instructions, when executed by a processor, cause the processor to execute the live room topic recommendation method provided by any embodiment of the present disclosure.

Compared with the related technologies, the technical solution provided by the embodiments of the present disclosure has the following advantages: according to the processing solution for recommending information provided by the embodiments of the present application, a live room topic recommendation request is acquired, and then, according to the live room topic recommendation request, at least one piece of live room topic recommendation information with higher popularity that satisfies a preset popularity condition is determined. Thus, popular topics are recommended for live, which provides a technical support for improving the liveness and quality of live videos.

The above description is only an illustration of the preferred embodiments of the present disclosure and the technical principles employed. It should be understood by those skilled in the art that the scope of disclosure involved in the present disclosure is not limited to the technical solution formed by a particular combination of the above technical features, but also encompasses other technical solution formed by any combination of the above technical features or equivalents thereof without departing from the spirit of the disclosure, for example, the technical solution formed by a mutual replacement of the above features and the technical features disclosed in the present disclosure (but not limited to) having similar functions.

In addition, while various operations are depicted in a particular order, this should not be understood as requiring that these operations be executed in the particular order shown or in a sequential order. Under certain circumstances, multitasking and parallel processing are possibly advantageous. Likewise, while several specific implementation details are included in the above discussion, these should not be construed as limitations on the scope of the present disclosure. Certain features that are described in the context of a separate embodiment can also be implemented in combination in a single embodiment. Conversely, various features that are described in the context of a single embodiment can also be implemented in multiple embodiments separately or in any appropriate subcombination.

Although the present subject matter has been described in language specific to structural features and/or methodological acts, it should be understood that the subject matter defined in the appended Claims is not necessarily limited to the above-described features or acts. Rather, the above-described specific features and acts are only exemplary forms of implementing the Claims.

## Claims

1. A live room topic recommendation method, comprising:
acquiring a live room topic recommendation request; and
determining, according to the live room topic recommendation request, at least one piece of live room topic recommendation information satisfying a preset popularity condition.

2. The live room topic recommendation method according to Claim 1, wherein,
the acquiring a live room topic recommendation request comprises:
acquiring a live room topic recommendation request corresponding to a viewer end; and
the determining, according to the live room topic recommendation request, the live room topic recommendation information satisfying a preset popularity condition comprises:
determining, according to the live room topic recommendation request corresponding to the viewer end, at least one piece of live room topic recommendation information corresponding to the viewer end that satisfies a preset popularity condition, so as to display the at least one piece of live room topic recommendation information at the viewer end.

3. The live room topic recommendation method according to Claim 1, wherein,
the acquiring a live room topic recommendation request comprises:
acquiring a live room topic recommendation request corresponding to a live streamer end; and
the determining, according to the live room topic recommendation request, the live room topic recommendation information satisfying a preset popularity condition comprises:
determining, according to the live room topic recommendation request corresponding to the live streamer end, at least one piece of live room topic recommendation information corresponding to the live streamer end that satisfies a preset popularity condition, so as to display the at least one piece of live room topic recommendation information at the live streamer end.

4. The live room topic recommendation method according to any one of Claims 1 to 3, further comprising:
acquiring a selection request for target live room recommendation information in the at least one piece of live room topic recommendation information, and taking the target live room recommendation information as a current topic of the live room;
controlling display of the current topic.

5. The live room topic recommendation method according to any one of Claims 1 to 4, wherein, the live room topic recommendation request is a question-and-answer type topic recommendation request, and the live room topic is a topic on which a live streamer interacts with viewers in the live room.

6. The live room topic recommendation method according to any one of Claims 1 to 5, wherein the method is executed by a server.

7. A live room topic recommendation method, comprising:
receiving a live room topic recommendation operation;
displaying, in response to the live room topic recommendation operation, at least one piece of live room topic recommendation information satisfying a preset popularity condition;
receiving a selection operation for the at least one piece of live room topic recommendation information, and determining target live room topic recommendation information corresponding to the selection operation, and taking the target live room topic recommendation information as a current topic of the live room.

8. The live room topic recommendation method according to Claim 7, wherein, the receiving a selection operation for the at least one piece of live room topic recommendation information and determining target live room topic recommendation information corresponding to the selection operation comprises:
receiving a trigger operation for the at least one piece of live room topic recommendation information;
determining the target live room topic recommendation information corresponding to the trigger operation.

9. The live room topic recommendation method according to any one of Claims 7 and 8, wherein, the receiving a selection operation for the at least one piece of live room topic recommendation information and determining target live room topic recommendation information corresponding to the selection operation comprises:
determining, in response to a trigger operation for a preset random selection control, target live room topic recommendation information from at least one piece of live room topic recommendation information according to a preset random algorithm.

10. The live room topic recommendation method according to any one of Claims 7 to 9, wherein, after displaying at least one piece of live room topic recommendation information satisfying a preset popularity condition, the method further comprises:
if a live room topic recommendation update operation is received, displaying at least one piece of updated live room topic recommendation information satisfying a preset popularity condition;
receiving a trigger operation for target live room topic recommendation information in the at least one piece of updated live room topic recommendation information, and taking the target live room topic recommendation information as a current topic of the live room.

11. The live room topic recommendation method according to any one of Claims 7 to 10, further comprising:
receiving a trigger operation for target live room topic recommendation information in at least one piece of live room topic recommendation information, and displaying the target live room topic recommendation information in a topic editing area;
acquiring, in response to an edition operation for the target live room topic recommendation information displayed in the topic editing area, adjusted target live room topic recommendation information.

12. The live room topic recommendation method according to any one of Claims 7 to 10, wherein the method is executed by a client.

13. A live room topic recommendation method, comprising:
receiving a live room topic recommendation operation;
displaying, in response to the live room topic recommendation operation, at least one piece of live room topic recommendation information satisfying a preset popularity condition;
receiving a selection operation for any one or more pieces of live room topic recommendation information in the at least one piece of live room topic recommendation information, and sending the one or more pieces of live room topic recommendation information corresponding to the selection operation for a live streamer end to select target live room topic recommendation information as a current topic of the live room.

14. The live room topic recommendation method according to Claim 13, further comprising:
receiving a trigger operation for the one or more pieces of live room topic recommendation information corresponding to the selection operation, and displaying the one or more pieces of live room topic recommendation information in a topic editing area; acquiring, in response to an edition operation for the one or more pieces of live room topic recommendation information displayed in the topic editing area, one or more pieces of adjusted live room topic recommendation information corresponding to the selection operation;
the sending the one or more pieces of live room topic recommendation information corresponding to the selection operation comprising: sending the one or more pieces of adjusted live room topic recommendation information corresponding to the selection operation.

15. The live room topic recommendation method according to Claim 13, further comprising:
displaying an interaction control and interaction information of the at least one piece of live room topic recommendation information;
updating, in response to a trigger operation for the interaction control of the at least one piece of live room topic recommendation information, the interaction information of the at least one piece of live room topic recommendation information;
sending the interaction information of the at least one piece of live room topic recommendation information to a live server, so that the live server generates at least one piece of live room topic recommendation information to be pushed to a live streamer end for the live streamer end to select target live room topic recommendation information as a current topic of the live room.

16. A live room topic recommendation apparatus, comprising:
an acquisition module for acquiring a live room topic recommendation request;
a determination module for determining, according to the live room topic recommendation request, at least one piece of live room topic recommendation information satisfying a preset popularity condition.

17. A live room topic recommendation apparatus, comprising:
a first reception module for receiving a live room topic recommendation operation;
a display module for displaying, in response to the live room topic recommendation operation, at least one piece of live room topic recommendation information satisfying a preset popularity condition;
a second reception module for receiving a selection operation for the at least one piece of live room topic recommendation information;
a topic determination module for determining target live room topic recommendation information corresponding to the selection operation, and taking the target live room topic recommendation information as a current topic of the live room.

18. A live room topic recommendation apparatus, comprising:
a first reception module for receiving a live room topic recommendation operation;
a display module for displaying, in response to the live room topic recommendation operation, at least one piece of live room topic recommendation information satisfying a preset popularity condition;
a second reception module for receiving a selection operation for the at least one piece of live room topic recommendation information;
a sending module for sending one or more pieces of live room topic recommendation information corresponding to the selection operation for a live streamer end to select target live room topic recommendation information as a current topic of the live room.

19. An electronic device, comprising:
a processor;
a memory for storing executable instructions for the processor;
the processor being used for reading the executable instructions from the memory, and executing the executable instructions to implement the live room topic recommendation method according to any one of Claims 1 to 15.

20. A computer readable storage medium storing a computer program which is used for executing the live room topic recommendation method according to any one of Claims 1 to 15.

21. A computer program product, wherein instructions in the computer program product, when executed by a processor, implement the live room topic recommendation method according to any one of Claims 1 to 15.

22. A computer program, comprising: instructions, when executed by a processor, cause the processor to execute the live room topic recommendation method according to any one of Claims 1 to 15.
